(19)

Europäisches
Patentamt
European
Patent Office
Office européen
des brevets

(11) **EP 2 219 343 A1**

(12) **EUROPEAN PATENT APPLICATION**

(43) Date of publication:
**18.08.2010 Bulletin 2010/33**

(51) Int Cl.:
*H04L 29/06* (2006.01)    *H04L 12/56* (2006.01)

(21) Application number: **09250358.0**

(22) Date of filing: **12.02.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **BRITISH TELECOMMUNICATIONS public limited company**<br>**London**<br>**EC1A 7AJ (GB)** | (72) Inventor: **The designation of the inventor has not yet been filed**<br><br>(74) Representative: **Lau, Chi-Fai et al**<br>**BT Group Legal**<br>**Intellectual Property Department**<br>**PP C5A, BT Centre**<br>**81 Newgate Street**<br>**London**<br>**EC1A 7AJ (GB)** |

(54) **Modification of explicit congestion notification (ECN) by skipping congestion experienced (CE) events**

(57) There is proposed a modification to the ECN protocol to remove the one-to-one relationship between the network signalling congestion and the sender response to that congestion. The result is to allow a receiver terminal to exhibit some control of bandwidth share relative to other receiver terminals. The idea is to filter the congestion experienced (CE) markings arriving at a receiver such that they do not correspond directly with the setting of the ECN echo (ECE) flag in acknowledgement packets sent back to the sender. In particular, the idea is to skip a specific number of CE markings such that fewer than normal acknowledgement packets with ECE flags set are sent back to the sender. This gives the receiver some control over the frequency of congestion window reduction (CWR) events at the sender and thus exhibit some control on the transmission rate from the sender.

Figure 7

EP 2 219 343 A1

**Description**

**Field of the Invention**

This invention relates to a method for handling a data flow at a receiver, in particular a method for managing and responding to received data packets to give a certain level of control over the transmission rate of the data packets in the flow.

**Background to the Invention**

For some IP applications such as IPTV it is often considered beneficial to introduce some guarantee on bandwidth availability, normally through the use of some form of bandwidth reservation. These schemes offer some advantages, but they are often expensive to deploy, and require a special technical and commercial relationship between the content and network providers. Usually, this means that to be a provider of IPTV it also necessary to be an ISP. In addition, the required admission control imposes a hard limit on the number simultaneous streams which can lead to session refusals.

The encoding of video ideally requires a bit stream that varies in bandwidth. This enables complex portions of video (e.g. high spatial detail, high movement) to be encoded with more bits than simpler portions (e.g. talking head). Video encoded in this way is perceived as constant quality, but it requires a variable bit rate (VBR) transport. Most IPTV systems in place today (e.g. BT Vision) rely on the reservation of fixed portions of network bandwidth and use constant bit rate CBR video to match the reserved portion of bandwidth. Whilst simple to understand and to dimension such a system, it does not deliver a constant quality experience and importantly does not make the most effective use of the total available bandwidth.

It has been demonstrated by using constant quality video encoding (with a VBR) it is possible to double the number of simultaneous streams over the same network compared with using CBR encoding with the same perceived quality. However, there has been little work in exploring what mechanisms could actually be used to apportion the bandwidth in a channel to allow each stream in the channel to have constant quality video encoding.

Indeed, in applications that run over the Internet, the mechanisms in place in the IP protocol, and more specifically TCP/IP, tend to result in streams receiving the same bandwidth allocation. As already stated, this is not desirable, and instead it is preferred that each stream can be adapted to receive a bandwidth share that is proportional to the requirement relative to other streams in order to maintain a constant quality video stream.

In TCP/IP, the existing congestion avoidance techniques (such as those based on congestion window management) respond to network congestion by reducing the transmission rate. All TCP flows across the same portion of a congested network will respond in a similar fashion resulting in each flow getting a roughly equal share of the available bandwidth.

**Summary of the Invention**

It is the aim of embodiments of the present invention to address one or more of the above-stated problems.

According to one aspect of the present invention, there is provided a method of handling a data flow at a receiving terminal in a packet based communications network, said data flow comprising at least a first and second data packet, and said method comprising:

   i) receiving a first data packet marked with a first flag indicating congestion experienced at an intermediate node in the network, said first data packet forming part of a data flow received by the receiving terminal;
   ii) responding to the first data packet by repeatedly transmitting one or more acknowledgement packets, each acknowledgement packet marked with a second flag indicating observation of the first flag in the first data packet, until a second data packet is received marked with a third flag indicating a congestion response made by a transmitting terminal, wherein the congestion response reduces the effective transmission rate associated with the data flow; then
   iii) responding to the second data packet if the second data packet is also marked with a first flag indicating congestion experienced at an intermediate node, otherwise responding to a received third data packet marked with a first flag indicating congestion experienced at an intermediate node, by transmitting an acknowledgement packet indicating receipt of the second or third data packet, and wherein said acknowledgement packet does not comprise a second flag indicating observation of the first flag in the second or third data packet.

Preferably, the data flow is an IP data flow. Moreover, the first flag may be a congestion experienced flag in an explicit congestion notification field in the IP header of the first data packet.

The congestion response made by the transmitter may be a reduction in the congestion window associated with the data flow. The reduction in the congestion window may be in response to the acknowledgement packet marked with a second flag.

Preferably, step (iii) is repeated at least once. Step (iii) effectively represents the "skipping" of the congestion experienced events, and thus avoids sending back to the transmitter any notification of congestion. The result is that the congestion window is not reduced, and hence the effective transmission rate is maintained relative to a receiver that does not "skip". Step (iii) also covers both "skipping" scenarios where a) the second data packet includes both the third flag indicating a congestion response by the transmitter, as well as a first flag indicating congestion experienced at an intermediate node, as well as b) where the second data packet is only marked with the third flag, but where there is a further, third, data packet marked with a first flag indicating congestion experienced at an intermediate node.

In a second aspect of the present invention, there is provided a receiving terminal for handling a data flow in a packet based communications network, wherein said data flow comprises at least a first and second data packet, and receiving terminal comprising:

an input port adapted to receive a first data packet marked with a first flag indicating congestion experienced at an intermediate node in the network, said first data packet forming part of a data flow received by the receiving terminal; a processor adapted to respond to the first data packet by controlling an output port to repeatedly transmit one or more acknowledgement packets, each acknowledgement packet marked with a second flag indicating observation of the first flag in the first data packet, until a second data packet is received by the input port marked with a third flag indicating a congestion response made by a transmitting terminal, and wherein the congestion response reduces the effective transmission rate associated with the data flow; and

the processor further adapted to respond to the second data packet if the second data packet is also marked with a first flag indicating congestion experienced at an intermediate node, otherwise responding to a received third data packet marked with a first flag indicating congestion experienced at an intermediate node, by controlling the output port to transmit an acknowledgement packet indicating receipt of the second or third data packet, and wherein said acknowledgement packet does not comprise a second flag indicating observation of the first flag in the second or third data packet.

Aspects of the present invention allow a given network to be fully utilised yet the bandwidth available be apportioned in non-equal amounts between the various flows. In contrast, conventional TCP will always aim to divide the available bandwidth into equal portions. For some applications this may be considered fair, although for many others there are arguments against this approach.

The present approach is able to operate autonomously with receivers operating independently and still result in bandwidth apportioning. Each receiver is effectively allocated a proportion of the available bandwidth without global knowledge of other receivers.

The invention is very lightweight requiring no modification to other network components other than a modification to the receiving clients. Receivers operating with this scheme are able to co-exist effectively with other receivers not using such a scheme yet still acquire a non-equal portion of available bandwidth.

**Brief Description of the Drawings**

For a better understanding of the present invention reference will now be made by way of example only to the accompanying drawings, in which:

Figure 1 shows the IPv4 Type Of Service (TOS) octet, including the 2 bits designated for ECN use;
Figure 2 shows bytes 13 and 14 of a TCP header, including the fields designated for the congestion window reduced flag and the ECN echo flag;
Figure 3 shows data flow between a sending terminal and a receiving terminal with ECN active, but without congestion at the router;
Figure 4 shows data flow between a sending terminal and a receiving terminal with ECN active, and with congestion experienced at the router;
Figure 5 shows how differently marked data packets are received and sent by the receiving terminal and how they are inter-dependent over time;
Figure 6 shows a data flow between a sending terminal and a receiving terminal with ECN active, and with congestion experienced at the router in a preferred example of the invention;
Figure 7 shows how CE marked data packets are handled by the receiving terminal in an example of the invention;
Figure 8 is a flow chart summarising the operation of a method of skipping CE marked data packets in an example of the present invention;
Figure 9 illustrates how CE marked data packets can be skipped for various non-integer skip rates;

Figure 10 illustrates how the transmission rate at the transmitter varies over time;

Figure 11 shows a network having two receivers in an example of the present invention;

Figure 12 is a graph showing the ratio of the transmission rates for two receivers, one without skipping and the other skipping at various rates;

Figure 13 is a block diagram illustrating some of the components in a receiver in an example of the invention.

**Description of Preferred Embodiments**

The present invention is described herein with reference to particular examples. The invention is not, however, limited to such examples.

Explicit Congestion Notification (ECN) is protocol for signalling congestion in IP networks by marking packets rather than dropping them. Used with TCP it enables a sender to be informed of congestion so that it can reduce its transmission rate in an attempt to avoid future congestion. As packets are not dropped, there is no need for packet re-transmission and network utility is improved. ECN uses 2 bits in the IP header, and in the case of ECN capable TCP a further 2 bits in the TCP header of a data packet to be transmitted.

A router equipped with active queue management, such as Random Early Detection (RED), can mark IP headers with appropriate flags to signal congestion to the endpoints prior to the router's buffer overflowing and thus consequential packet loss. Under ideal conditions, there is little need for retransmissions, which gives rise to an improved overall throughput.

The IP header markings are detected at the receiver and are propagated up the stack to the transport protocol layer. In the case of TCP, further packet markings in the TCP header enable the receiver to signal to the sender that the network is becoming congested and that the sender should reduce the congestion window pre-emptively as if a packet loss had occurred.

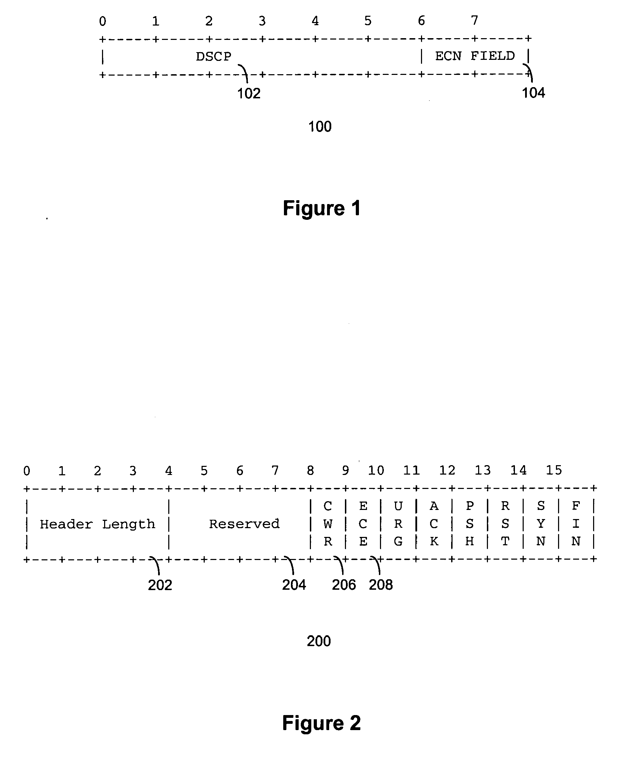

Figure 1 shows the IPv4 Type Of Service (TOS) octet 100, where bits 6 and 7 are designated as the ECN field 104. Specifically, the first 6 bits represent the differentiated services codepoint (DSCP) field 102, and the 2 following bits the ECN field 104, which can be set as follows:

- 0-0 = Not ECN
- 0 1 = ECN Capable Transport, ECT(1)
- 1 0 = ECN Capable Transport, ECT(0)
- 1 1 = CE Congestion Experienced

Figure 2 shows bytes 13 and 14 of a TCP header 200. Field 206 is for the congestion window reduced (CWR) flag and field 208 is for the ECN echo flag (ECE). The ECE flag is set by a receiver to signal to a sender that it has observed congestion (i.e. it has seen a CE flag in a received packet), while the CWR flag allows a sender to signal to a receiver that it has responded to congestion by reducing its congestion window. Typically these flags are set to "1" for flag active, and "0" for flag inactive.

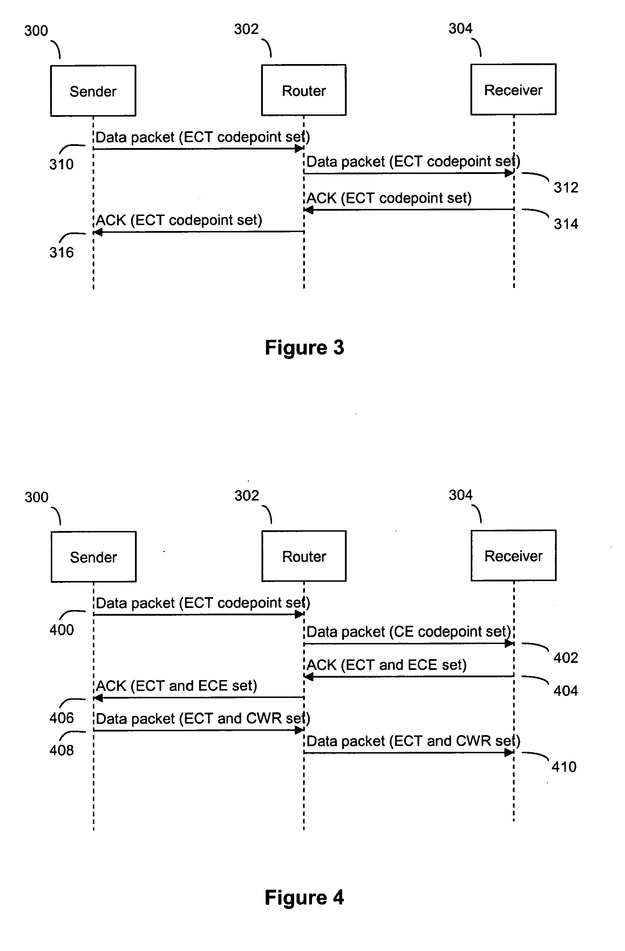

The operation of ECN enabled TCP and its use of the above identified fields will now be described with reference to the message flow diagrams of Figure 3 and 4.

Figure 3 shows the message flow between a sending terminal 300 and a receiving terminal 304 via an intermediate router 302 when no congestion is experienced at the router 302. Other network elements may be present in a practical arrangement, but these have been omitted for simplicity, with only the relevant elements identified. The sending terminal 300, router 302 and receiving terminal communicate with each other over a network such as the Internet, and operate in accordance with the TCP protocol.

Consider the situation where the sending terminal 300 is planning to send a number of data packets to receiving terminal 304. If ECN is to be used, then the sending terminal 300 and the receiving terminal 304 negotiate in advance that ECN should be applied to the negotiated data stream. Each data packet is then transmitted by the sending terminal 302 with the ECN field 104 in the IP header set with codepoints "0 1" or "1 0" to signal ECN capable transport (i.e. the end points in this connection support ECN). This is illustrated in step 310 of Figure 3. This ECT marked data packet is received at the router 302, which is not experiencing any congestion and thus forwards the same data packet onto the receiving terminal 304 in step 312. The receiving terminal 304 receives the ECT marked data packet, and acknowledges receipt of the data packet by sending an acknowledgement packet ACK in step 314, with the ECT codepoints set in the ACK data packet. The ACK data packet is received by the router 302 and forwarded onto the sending terminal 300 in step 316. The sending and acknowledgement of the data packet is thus successfully completed.

Now, if the router does experience congestion when ECN is active, for example when the router's buffer is filled beyond a particular threshold, then the router can start marking data packets with the congestion experienced flag in the ECN field of the IP header before forwarding onto the receiving terminal. This is possible in many routers that have suitable active queue management systems such Random Early Detection (RED). The mechanisms in ECN enabled TCP allow the sender to be informed of congestion and respond by a reduction in its congestion window thus causing a reduction in the transmission rate. The data flow when ECN is active and when the router 302 experiences congestion is set out in Figure 4.

In step 400, a data packet is transmitted by the sending terminal 300 with the ECN field 104 in the IP header set with codepoints "0 1" or "1 0" to signal ECN capable transport (ECT flag set). This data packet is received at the router 302, which is now experiencing congestion, so marks the data packet accordingly to signal congestion. Thus, the router 302 marks the data packet by setting the congestion experienced CE codepoint "1 1" in the ECN field of the IP header, and forwards this CE marked data packet onto the receiving terminal 304 in step 402.

The receiving terminal 304 receives the data packet with the CE codepoint set, and acknowledges successful receipt of the data packet by sending an acknowledgement packet ACK in step 404, with the ECT codepoint set in the IP header, as well as ECE flag in the TCP header. The ECE (ECN-Echo) flag is used to notify the sending terminal that a router via which a previous packet was sent is experiencing congestion and had signalled as such using ECN. The ACK packet is received by the router 302 and forwarded onto the sending terminal 300 in step 406. The receiving terminal 304 will continue marking all subsequent ACK packets with ECE set as a protection against dropped ACK packets until a suitable notification is received from the sending terminal 300.

When the sending terminal 300 receives the ACK packet, it detects that congestion was experienced on the network and behaves as if a packet had been dropped, which in the case of TCP is by halving the size of the congestion window. Depending on the variant of TCP being used, the size of the reduction can vary (a reduction of a half is common). The congestion window is defined as the number of segments that the sender can send before receiving an ACK. In effect, the larger the congestion window, the larger the number of data packets that can be outstanding at a given time. Conversely, a reduction in the size of the congestion window will reduce the number of data packets that can be outstanding and thus effectively reduce the number of data packets sent in a given time frame i.e. the transmission rate.

The sending terminal 300 acknowledges receipt of the ACK packet by marking the next data packet it sends with the ECT and congestion window reduced CWR flags set. This ECT and CWR marked data packet is transmitted by the sending terminal 300 in step 408, and forwarded to the receiving terminal 304 in step 410. Once the receiving terminal 304 has received this data packet with CWR set, the receiving terminal stops marking ACK packets with the ECE flag. A data packet with the CE flag set that is received after a received data packet with CWR set is treated as a new instance of congestion.

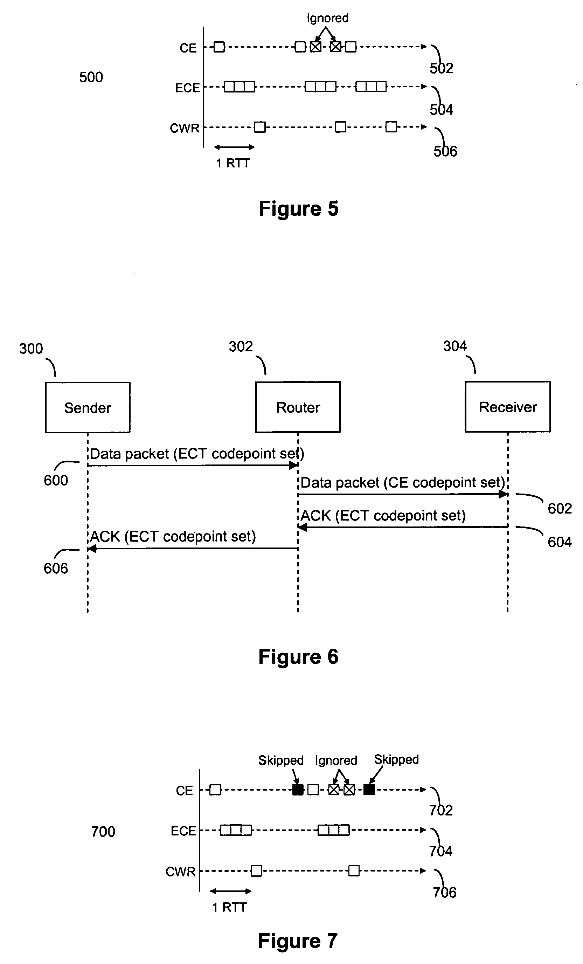

As noted above, the receiving terminal will carry on sending ACK packets with ECE to the sending terminal until it receives a data packet with CWR set. Thus, the sending terminal can receive a succession of ACKs with ECE set. However, the sending terminal will only respond to the first of these ACK packets by halving the congestion window once and marking a single subsequent data packet with CWR set. Indeed, the sending terminal will only reduce the congestion window and send a CWR marked data packet once per round trip time (RTT). This is because one RTT is the minimum time taken for the first ECE marked ACK packet and subsequent CWR marked data packet to be sent and received respectively by receiving terminal, and so any ECE marked ACK sent within that one RTT is part of the same congestion occurrence notification. This is illustrated in Figure 5.

Figure 5 illustrates how the three main packet types received and sent by the receiving terminal and how they are inter-dependent over time. Stream 502 represents CE marked data packets received at the receiving terminal 304. Stream 504 represents ECE marked ACK packets sent by the receiving terminal 304. Stream 506 represents CWR marked data packets received at the receiving terminal 304. CE marked packets (stream 502) arriving at the receiver are reported back to the sender with ECE marked ACKs. The sender receives the ECE marked ACKs and responds by halving its congestion window and signalling with a CWR marked data packet. This process as a minimum takes one RTT shown by the marked time difference between the first received CE marked packet and the first received CWR marked packet at the receiving terminal. The third and fourth CE marked data packets arriving at the receiver are effectively ignored as there is an outstanding CWR from previous event - the second CE marked data packet. However, once the outstanding CWR (corresponding to the second CE marked data packet) is received, subsequent CE marked data packets (in this example, the fifth CE packet) are recognised and responded to with ECE marked ACKs. This shows that although 5 CE marked packets are received, only 3 congestion window halving events and associated CWR marked data packets are generated.

Thus, by using the ECN enabled TCP protocol, it is possible for the router 302 to notify the sending terminal 300 of congestion before packets need to be dropped, with the sending terminal 300 reacting by reducing the size of the congestion window.

In examples of the present invention, it is proposed that the ECN protocol is modified in a manner that removes the one-to-one relationship between the network signalling congestion (CE) and the end-point response to that congestion (CWR). In this particular example, allowing a receiver terminal to exhibit some control of bandwidth share relative to other receiver terminals. The underlying principle is to influence the ratio of bandwidth between 2 more flows over the same network (or network segment). Examples of the present invention are based on the idea of filtering the CE markings arriving at a receiver such that they do not correspond directly with the setting of the ECE flag in ACK packets sent back to the sender. In particular, the idea is to skip a specific number of CE markings such that fewer than normal ACKs with ECE flags set are sent back. This gives the receiver some control over the frequency of congestion window reduction events at the sender and thus exhibit some control on the transmission rate from the sender.

An example of the present invention is set out in Figure 6, where the receiving terminal 304 ignores a CE marking on an incoming data packet signalling congestion at the router 302. So, in step 600, the sending terminal 300 transmits a data packet with the ECN field 104 in the IP header set with codepoints "0 1" or "1 0" to signal ECN capable transport (ECT flag set). The data packet is received at the router 302 which is experiencing congestion. The router 302 marks the data packet accordingly to signal congestion. It does so by setting the congestion experienced CE codepoint to "1 1" in the ECN field of the IP header, and forwards this CE marked data packet onto the receiving terminal 304 in step 602.

However, in examples of the present invention, the receiving terminal 304 does not acknowledge receipt of the CE codepoint, but instead effectively skips the CE codepoint by sending an acknowledgement packet ACK with the ECT codepoint set instead without setting the ECE flag. This ECT marked data packet is transmitted by the receiving terminal 304 to the sending terminal 300 via the router 302 in steps 604 and 606. When the sending terminal 300 receives the ACK packet, it continues as normal as the ACK did not include an ECE flag to instruct the sending terminal to reduce the congestion window size. Thus, the deliberate "skipping" of a received CE flag in a data packet by the receiving terminal ensures that the transmission rate used by the sending terminal is not reduced (and indeed will increase under TCP congestion avoidance protocols), even though the router is congested and is signalling accordingly. By controlling the skipping rate (e.g. skip 1 out of every 2 CEs, or 2 of 3), the receiving terminal can control the transmission rate of data packets. Furthermore, when there are other data flows in the same network, the relative bandwidths experienced by receiving terminals can be managed by adjusted relative skipping rates at those receiving terminals.

In practice, as described above with reference to Figure 5, some CE marked packets might be ignored if there is an outstanding CWR marked packet at the receiver.
Figure 7 shows how the skipping of CE packets as required in examples of the present invention for the purposes of controlling bandwidth is managed, whilst also taking into consideration the ignored CE packets.

In Figure 7, there are shown 3 streams of data being received and sent by the receiving terminal 304. Stream 702 represents CE marked data packets received at the receiving terminal 304. Stream 704 represents ECE marked ACK packets sent by the receiving terminal 304 in response to received CE marked packets. Stream 706 represents CWR marked data packets received at the receiving terminal 304.

The method applied for determining which CE marked data packets to ignore is measured in relation to the number of congestion window reduction events (i.e. received CWR marked packets). Thus, data packets marked with CE flags are only considered when there is no outstanding CWR data packet.

Thus, if a skip of 1 is applied (note, we define a skip interval of 1 to mean we skip 1 for every 1 responded to, and similarly a skip interval of 2 to mean we skip 2 for every 1 responded to, and so on), the first CE marked packet received by the receiving terminal after a CWR marked packet has been received is skipped, but then the next CE marked packet is responded to. Hence, in Figure 7, we see that the first CE marked packet is responded to with ECE marked ACKs by the receiving terminal as normal until the outstanding CWR marked packet is received. Then the next (second) CE marked packet is skipped without sending an ECE marked ACK in accordance with the preferred method. The third CE is handled as normal by responding with ECE marked ACKs until a CWR marked packet is received. The fourth and fifth CE marked packets are ignored until the outstanding CWR marked packet is received. After the CWR marked packet is received, the next (sixth) CE marked packet can be skipped in accordance with the preferred method.

In short, the method relies on keeping a count of independent CE data packets that should directly result in a congestion response and the generation of a CWR data packet.

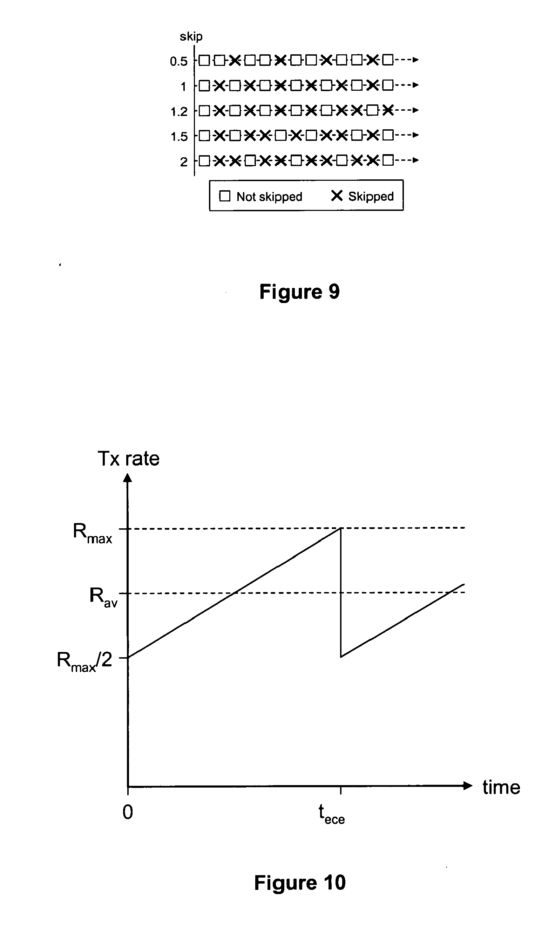

Non-integer skip intervals can be accommodated by using a counter which is decremented by 1 when a CE marked packet is skipped, and is incremented by the non-integer skip interval when the ECE flag is first set for a sequence of ACK messages. ECE flags are set in ACKs when a CE event occurs and the counter is greater than or equal to 1. Figure 9 shows the resulting sequence of skipped CE packets for a number of different integer and non-integer skip rates.

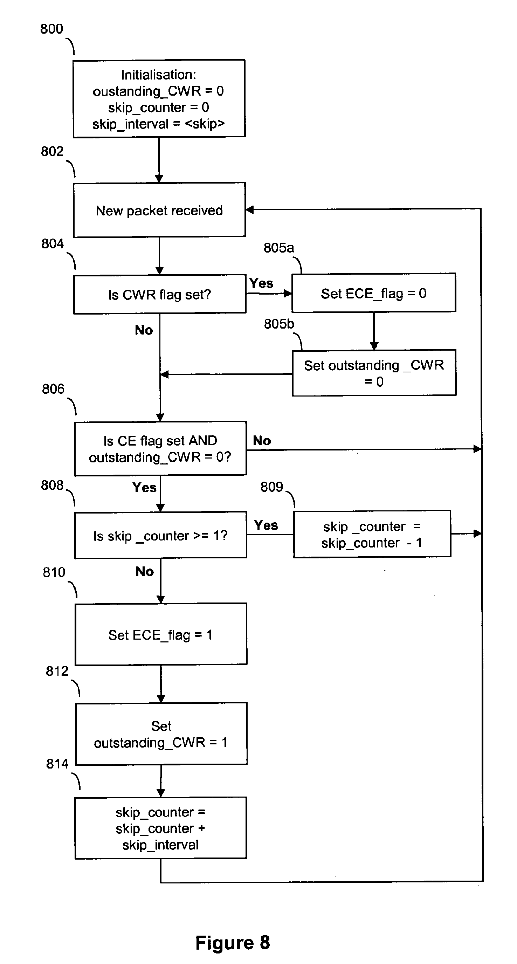

The steps of a preferred method of operation at the receiving terminal 304 are shown in the flow chart in Figure 8, which includes the ability to handle non-integer skip intervals. The steps of the flow chart in Figure 8 will be described with reference to the example shown in Figure 7.

In step 800, the following variables are initialised: an outstanding_CWR variable, which is used to indicate whether there is a CWR marked packet outstanding; skip_counter variable, which is initially set to 0; and skip_interval variable, which is set to the chosen skip interval, <skip>. In this example (and referring to Figure 7), the chosen skip interval is 1).

In step 802, the receiver waits until a new data packet is received. In this example, let us assume that the new data packet first received does not include any congestion experienced CE markings, and thus is a packet preceding the first CE marked packet in Figure 7. The method then passes to step 804, where a check is made on the received data packet to see if the CWR flag is set in the TCP header.

In this instance, the CWR flag has not been set, and processing passes to step 806, which checks to see if the CE flag in the IP header of the data packet received has been set AND if the outstanding_CWR variable is zero. As no CE flag has been set, processing passes back to step 802 where a new data packet received is processed. This loop from steps 802 to 806 and back to 802 is repeated until a new data packet received includes a CE flag set, such as the first data packet in Figure 7 marked with a CE flag.

Thus, when the first CE marked data packet is received, the result of the test in step 806 is Yes (as CE flag is set, and outstanding_CWR = 0), and thus processing in step 806 passes to step 808. In step 808, a check is made on the skip_counter to see if it is greater than or equal to 1, which in this instance it is not, and so processing passes to step 810.

In step 810, ECE_flag is set to 1, which means that any ACK message that is to be sent should be sent with the ECE flag activated. This can be seen in Figure 7, where the next 3 ACK data packets sent by the receiver have the ECE flag set in the data packet.

In step 812, outstanding_CWR is set to 1, which effectively indicates that there is now (following the receipt of an independent CE data packet) a CWR marked data packet outstanding.

In step 814, the skip counter is incremented by the skip interval i.e. skip_counter is set to 1 (originally = 0, skip_interval =1). Processing then passes back to step 802, which waits for a new packet to be received.

Now, using Figure 7 as our example, the next data packet received is the first CWR marked data packet. Thus, at step 804, the CWR flag is indeed set, so processing passes to step 805a, where ECE_flag is set to 0. This effectively indicates that no more ECE flags should be set in future ACK messages. Then in step 805b, outstanding_CWR is set to 0, as there is no longer a CWR marked packet outstanding.

In step 806, the check fails as the CE flag is not set (even though outstanding_CWR = 0), and processing passes back to step 802 and waits for the next new packet to be received.

In this present example, the next new packet is the second CE marked packet shown in Figure 7. Thus, in step 804, the check on whether the CWR flag has been set in the new packet results in "No", and thus processing passes directly to step 806. In step 806, the check passes, as the CE flag is set, AND the outstanding_CWR flag = 0. Thus, processing passes to step 808, which checks the state of skip_counter. The skip counter was last set to 1, and thus the check on whether the skip_counter is greater to or equal to 1 results in a "Yes" and processing passes to step 809, where the skip counter is reduced by 1 (so skip_counter is now 0), and processing passes back to step 802 and waits for the next new data packet to be received. As such, the receipt of the second CE marked data packet does not result in the setting of ECE_flag or outstanding_CWR to 1, and thus the processing of the second CE marked data packet is effectively "skipped".

At this stage, the variables are as follows: outstanding_CWR = 0, skip_counter = 0, skip_interval = 1 and ECE_flag = 0. This is in effect the same state the system was in before the first CE marked packet was received. Thus, when the next (third in Figure 7) CE marked packet is received, the processing is the same as for the first CE marked packet, resulting in outstanding_CWR = 1, skip_counter = 1, and ECE_flag = 1. Subsequent ACK data packets are therefore sent with the ECE flag marked.

Now, processing passes back to step 802, and the next data packet to be received is another CE marked data packet (the fourth CE marked packet in Figure 7). In step 804, we find that the CWR flag is not set in this data packet, and we move to step 806. In step 806, the CE flag is set, but the outstanding_CWR is not 0, and so we move to back to step 802 and wait for the next data packet to be received. In this way, the CE marked data packet is effectively ignored as it does not result in any change in any of the variables, for example ACKs are still being sent with ECE flag set, the outstanding_CWR is still set to 1, and the skip_counter is still set to 1 as well which will ensure that the next independent CE marked data packet will be skipped.

The next data packet to be received is another CE marked data packet (the fifth CE marked packet in Figure 7). This is treated the same way as the previous (fourth) CE marked packet, and is effectively ignored. The variables all remain unchanged.

The next data packet received is the CWR marked data packet (the second CWR marked data packet in Figure 7). So, in step 804, the check finds that the CWR flag is set in the received data packet, and processing passes to step 805a. In step 805a, the ECE_flag is reset to 0, and then in step 805b that follows, outstanding_CWR is also rest to 0. In step 806, the check fails as the CE flag is not set in this CWR marked data packet, and processing passes back to step 802, and the next data packet is awaited.

The next data packet received is a CE marked data packet (the sixth CE marked data packet in Figure 7). In step 804, the check to see if the CWR flag is set is negative, and thus processing passes to step 806. In step 806, the check to see if the CE flag is set and whether the outstanding_CWR flag is = 0 is positive, and processing passes to step 808. In step 808, a check is made on the skip_counter to see if it is greater than or equal to 1, which it is, as it remained unchanged at 1 during the processing of the previous (CWR marked) data packet. So, processing moves onto step 809, where the skip_counter is decremented by 1, and then back to step 802 where the next packet is awaited. Thus, the effect of the loop including steps 808, 809 and 802 is to skip the processing of the CE marked data packet.

It should be noted that a CWR marked data packet may also be marked with a CE flag, in which case, the processing for both the CWR flag being set and the CE flag being set as a result of steps 804 and 806 can be applied, and skipping applied if appropriate.

It can be seen that the method of Figure 8 when applied to the example shown in Figure 7 with a skip interval of 1 results in every other independent CE marked data packet to be "skipped".

It is clear that by manipulating the relationship between CE and ECE events as described above it is possible to influence the share of available bandwidth that a receiver gets. The ratio of bandwidth share is determined by the skipping interval.

The following sections reveal the relationship between the bandwidth ratio and the skip interval for the case of TCP.

Once a sender operating under TCP has passed the slow-start phase, it will respond to received data packets with the ECE flag set by halving its congestion window as it would if a packet had been lost. After this point, the congestion window is increased in a linear fashion until the next ECE marked packet or loss event. This is shown in Figure 10, which plots a graph of the transmission rate after the slow start phase over time. Assuming that an increase in congestion window size is limited to once every round trip time (RTT) when it is increased by one segment size, then the instantaneous transmission rate can be modelled as shown below.

The maximum transmission rate $R_{max}$ can be expressed as:

$$R_{\max} = \frac{R_{\max}}{2} + \frac{t_{ece}}{RTT} \cdot \frac{S}{RTT} \qquad (1)$$

where

$t_{ece}$ is the time an ECE marked packet arrives at the sender

RTT is the round trip time

S is the size of a packet

The second term in equation (1) is the number of window increase occurrences, $t_{ece}/RTT$, multiplied by the magnitude of each rate increase, S/RTT. As the rate increase is linear it can be observed that the average transmission rate is:

$$R_{av} = \tfrac{3}{4} R_{\max} \qquad (2)$$

Substituting equation (2) into equation (1) we get:

$$R_{av} = \frac{1.5 \cdot t_{ece} S}{RTT^2} \qquad (3)$$

The probability of an ECE marked packet being received, $P_{ece}$, will influence the average time between congestion window halving events. Thus $t_{ece}$ can be expressed as the product of the average packet transmission time and the average number of packets between ECEs:

$$t_{ece} = \frac{S}{R_{av}} \cdot \frac{1}{P_{ece}} \qquad (4)$$

By substitution of equation (4) into equation (3), the following relationship can be determined:

$$R_{av} = \frac{1.22}{\sqrt{P_{ece}}} \cdot \frac{S}{RTT} \tag{5}$$

S and RTT are generally fixed, so equation (5) gives a direct relationship between the probability of ECEs and the average transmission rate.

Equation (5) can be used directly by a device, such as a router or a receiving terminal, to generate ECE marked packets at the appropriate rate to achieve a desired average transmission rate.

It has been found that this is particularly useful when considering the transmission ratio between 2 or more flows and how this relative ratio can be tuned by using the above described ECN skipping technique.

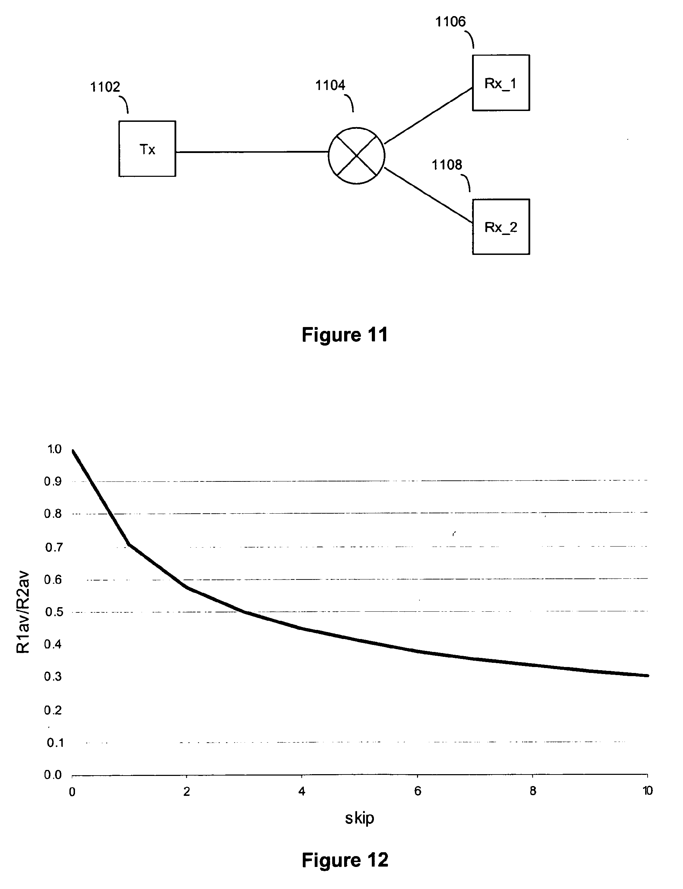

Now consider 2 receivers, Rx_1 1106 and Rx_2 1108, sharing the same network segment to a transmitter Tx 1102 as shown in Figure 11, and thus subject to the same congestion. If we assume that one receiver has a probability of sending ECE marked packets equal to the probability of receiving a CE marked packet and the second receiver has a probability of sending ECE marked packets reduced by skipping a number of CE marked packets as described above. As both flows share the same congested segment of network, then the probability of CE marked packets, $P_{ce}$, is the same for both flows. Thus, the probability of sending ECE marked packets in the first flow is:

$$P1_{ece} = P_{ce} \tag{6}$$

And the probability of sending ECE marked packets in the second flow is:

$$P2_{ece} = P_{ce}/(skip+1) \tag{7}$$

Substituting equations (6) and (7) into equation (5) we get:

$$R1_{av} = \frac{1.22}{\sqrt{P_{ce}}} \cdot \frac{S}{RTT} \tag{8}$$

$$R2_{av} = \frac{1.22}{\sqrt{P_{ce}/(skip+1)}} \cdot \frac{S}{RTT} \tag{9}$$

Combining equations (8) and (9) we can calculate the ratio between the two average rates as:

$$\frac{R1_{av}}{R2_{av}} = \frac{1}{\sqrt{skip+1}} \tag{10}$$

Equation (9) is plotted in the graph in Figure 12, which shows the ratio of the average transmission rates for the first (non-skipping) receiver and the second (skipping) receiver plotted against the skip rate applied by the second receiver. From Figure 12, it can be seen that the transmission rate ratio can be influenced by around a third for skip intervals of up to 10.

The methods described above have been validated in simulations using a network simulator. All the simulation results show that the transmission rate ratio between 2 flows as the skip rate of the second flow varies is largely consistent with the theoretical results.

A consideration of when every receiving terminal skips has also been made. Now, if every receiving terminal were to skip a large number of arriving CE marked data packets, then the methods described above will fail to signal the impending congestion back to the sender. The result is that normal TCP congestion control will take place with the inevitable packet loss becoming the signal of congestion.

As such, the method does rely to a certain extent on the individual receivers to be responsible and co-operative in their use of the CE skipping method. For example, if two flows exist and the first flow operates some level of CE skipping, then the second flow will naturally receive more CE marked packets than it would have had the first flow not skipped any. However, should the second flow not require an additional bandwidth share then the sender should respond as normal halving its congestion window and reducing it transmission rate as a consequence.

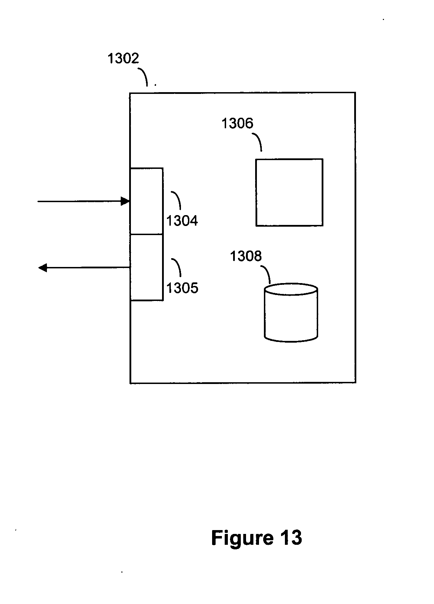

Figure 13 illustrates an example of the receiving terminal 1302 as described above. The receiving terminal 1302 comprises an input port 1304 for receiving data, and an output port 1305 for transmitting data. The input and output ports, as well as the data transmitted and received by the ports, are controlled by the CPU processor 1306. Memory 1308, which can take the form of RAM, a hard disk or other suitable storage media, stores application program data. Exemplary embodiments of the invention are realised, at least in part, by executable computer program code which may be embodied in the application program data. When such computer program code is loaded into the memory of the CPU 1306 for execution, it provides a computer program code structure which is capable of performing at least part of the methods in accordance with the above described exemplary embodiments of the invention.

Furthermore, a person skilled in the art will appreciate that the computer program structure referred can correspond to the process flow chart shown in Figure 8, where each step of the flow chart can correspond to at least one line of computer program code and that such, in combination with the CPU in the receiving terminal, provides apparatus for effecting the described process.

It should be noted that whilst the implementation described here is largely receiver based, the invention is not limited to implementations only at a receiver. The basis of the invention is to decouple the relationship between the networking signalling of congestion and the transport layer response to those signals to enable bandwidth to be apportioned in non-equal amounts. In the example described above, the receiver filters network congestion information by skipping CE events and a sender responds to the modified congestion information by halving its congestion window as per TCP. However, a skilled person will appreciate that the skipping of congestion events could take place at an intermediate node such as a hub or router, or indeed even at the sender.

An implementation at the sender would result in the receiver behaving as normal and signalling congestion to the sender by setting the ECE flag on every occasion it receives a CE marked packet. The sender may then choose to skip the ECE marked packets by not halving its congestion window, yet still signalling receipt of the ECE marked packet. It would do this by marking a subsequent packet sent to the receiver with the CWR flag despite the fact the window was not actually reduced.

In addition this idea is not limited to implementations utilising TCP. Other transport layer protocols such as UDP could be used, although being connectionless it does not have any intrinsic congestion control. However, combining with higher layer application layer protocols such as RTP/RTCP could provide such a mechanism. In this case congestion information signalled from the network would propagate up from the IP layer to the application layer where it could be filtered before signalling to the sender (via RTCP) where a congestion response is invoked. There are many different possible responses to congestion but generally some reduction in the transmission rate is required.

In general, it is noted herein that while the above describes examples of the invention, there are several variations and modifications which may be made to the described examples without departing from the scope of the present invention as defined in the appended claims. One skilled in the art will recognise modifications to the described examples.

**Claims**

1. A method of handling a data flow at a receiving terminal in a packet based communications network, said data flow comprising at least a first and second data packet, and said method comprising:

    i) receiving a first data packet marked with a first flag indicating congestion experienced at an intermediate node in the network, said first data packet forming part of a data flow received by the receiving terminal;
    ii) responding to the first data packet by repeatedly transmitting one or more acknowledgement packets, each acknowledgement packet marked with a second flag indicating observation of the first flag in the first data packet, until a second data packet is received marked with a third flag indicating a congestion response made by a transmitting terminal, wherein the congestion response reduces the effective transmission rate associated with the data flow; then

iii) responding to the second data packet if the second data packet is also marked with a first flag indicating congestion experienced at an intermediate node, otherwise responding to a received third data packet marked with a first flag indicating congestion experienced at an intermediate node, by transmitting an acknowledgement packet indicating receipt of the second or third data packet, and wherein said acknowledgement packet does not comprise a second flag indicating observation of the first flag in the second or third data packet.

2. A method as claimed in claim 1, wherein the data flow is an IP data flow.

3. A method as claimed in claim 2, wherein the first flag is a congestion experienced flag in an explicit congestion notification field in the IP header of the first data packet.

4. A method according to any preceding claim, wherein the congestion response made by the transmitter is a reduction in the congestion window associated with the data flow.

5. A method as claimed in claim 4, wherein the reduction in the congestion window is in response to the acknowledgement packet marked with a second flag.

6. A method as claimed in any preceding claim, wherein step (iii) is repeated at least once.

7. A receiving terminal for handling a data flow in a packet based communications network, wherein said data flow comprises at least a first and second data packet, and receiving terminal comprising:

an input port adapted to receive a first data packet marked with a first flag indicating congestion experienced at an intermediate node in the network, said first data packet forming part of a data flow received by the receiving terminal;

a processor adapted to respond to the first data packet by controlling an output port to repeatedly transmit one or more acknowledgement packets, each acknowledgement packet marked with a second flag indicating observation of the first flag in the first data packet, until a second data packet is received by the input port marked with a third flag indicating a congestion response made by a transmitting terminal, and wherein the congestion response reduces the effective transmission rate associated with the data flow; and

the processor further adapted to respond to the second data packet if the second data packet is also marked with a first flag indicating congestion experienced at an intermediate node, otherwise responding to a received third data packet marked with a first flag indicating congestion experienced at an intermediate node, by controlling the output port to transmit an acknowledgement packet indicating receipt of the second or third data packet, and wherein said acknowledgement packet does not comprise a second flag indicating observation of the first flag in the second or third data packet.

```
 0     1     2     3     4     5     6     7
+-----+-----+-----+-----+-----+-----+-----+-----+
|              DSCP              | ECN FIELD |
+-----+-----+-----+-----+-----+-----+-----+-----+
                   102                        104
```

100

# Figure 1

```
 0   1   2   3   4   5   6   7   8   9  10  11  12  13  14  15
+---+---+---+---+---+---+---+---+---+---+---+---+---+---+---+---+
|               |               | C | E | U | A | P | R | S | F |
| Header Length |   Reserved    | W | C | R | C | S | S | Y | I |
|               |               | R | E | G | K | H | T | N | N |
+---+---+---+---+---+---+---+---+---+---+---+---+---+---+---+---+
                 202             204 206 208
```

200

# Figure 2

300
Sender

302
Router

304
Receiver

Data packet (ECT codepoint set)
310

Data packet (ECT codepoint set)
312

ACK (ECT codepoint set)
314

ACK (ECT codepoint set)
316

**Figure 3**

300
Sender

302
Router

304
Receiver

Data packet (ECT codepoint set)
400

Data packet (CE codepoint set)
402

ACK (ECT and ECE set)
404

ACK (ECT and ECE set)
406

Data packet (ECT and CWR set)
408

Data packet (ECT and CWR set)
410

**Figure 4**

**Figure 5**

**Figure 6**

**Figure 7**

**Figure 8**

**Figure 9**

**Figure 10**

**Figure 11**

**Figure 12**

**Figure 13**

Europäisches
Patentamt

European
Patent Office

Office européen
des brevets

# EUROPEAN SEARCH REPORT

Application Number

EP 09 25 0358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELY D ET AL: "Robust Congestion Signaling" INTERNATIONAL CONFERENCE ON NETWORK PROTOCOLS 2001 INSTITUTE OF ELECTRICAL AND ELECTRONICS ENGINEERS COMPUTER SOCIETY US, [Online] 11 November 2001 (2001-11-11), pages 332-341, XP002540725 Retrieved from the Internet: URL:http://www.cs.washington.edu/homes/tom /pubs/ecn.pdf> [retrieved on 2009-08-10] * section 2 * * page 2; figures 1,2 * ----- | 1-7 | INV. H04L29/06 H04L12/56 |
| X | SPRING D WETHERALL D ELY UNIVERSITY OF WASHINGTON N: "Robust Explicit Congestion Notification (ECN) Signaling with Nonces" 20030601; 20030600, 1 June 2003 (2003-06-01), XP015009322 * page 1 - page 3 * ----- | 1-7 | |
| X | US 2006/092836 A1 (KWAN BRUCE H [US] ET AL) 4 May 2006 (2006-05-04) * paragraphs [0007], [0027] - [0037] * ----- | 1-7 | TECHNICAL FIELDS SEARCHED (IPC) H04L |
| A | RAMAKRISHNAN TERAOPTIC NETWORKS S FLOYD ACIRI D BLACK EMC K: "The Addition of Explicit Congestion Notification (ECN) to IP; rfc3168.txt" IETF STANDARD, INTERNET ENGINEERING TASK FORCE, IETF, CH, 1 September 2001 (2001-09-01), XP015008949 ISSN: 0000-0003 * sections 18,19 * ----- | 1-7 | |
| X | US 2008/304413 A1 (BRISCOE ROBERT J [GB] ET AL) 11 December 2008 (2008-12-11) * paragraphs [0053] - [0061] * ----- | 1-7 | |

The present search report has been drawn up for all claims

| Place of search | Date of completion of the search | Examiner |
|---|---|---|
| Munich | 17 August 2009 | Biro, Udo Bela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 25 0358

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2009

| Patent document cited in search report | Publication date | Patent family member(s) | Publication date |
|---|---|---|---|
| US 2006092836 A1 | 04-05-2006 | NONE | |
| US 2008304413 A1 | 11-12-2008 | WO 2006079845 A1 | 03-08-2006 |

EPO FORM P0459

For more details about this annex : see Official Journal of the European Patent Office, No. 12/82